# EUROPEAN PATENT SPECIFICATION

(11) **EP 2 032 340 B1**
(45) Date of publication and mention of the grant of the patent: **24.07.2013**
(21) Application number: 07784275.5
(22) Date of filing: 01.06.2007
(51) Int. Cl.: B29C 63/06

(54) **METHOD FOR APPLYING A PROTECTIVE LAYER TO A PIPE JOINT**
VERFAHREN ZUM AUFBRINGEN EINER SCHUTZSCHICHT AUF EINE ROHRVERBINDUNG
PROCÉDÉ D'APPLICATION D'UNE COUCHE PROTECTRICE À UN RACCORD DE CONDUITE

(30) Priority: 05.06.2006 US 810916 P; 05.06.2006 US 810993 P
(43) Date of publication of application: 11.03.2009
(73) Proprietor: 3M Innovative Properties Company, St. Paul, MN 55133-3427 (US)
(72) Inventor: WOOD, Thomas, L., Saint Paul, Minnesota 55133-3427 (US); PEREZ, Mario, A., Saint Paul, Minnesota 55133-3427 (US)
(74) Representative: Vossius & Partner
(86) International application number: PCT/US2007/070241
(87) International publication number: WO 2007/143565

(56) References cited:
- EP-A- 1 016 514
- CN-Y- 201 016 148
- CN-Y- 201 272 921
- JP-A- 57 193 316
- US-A- 5 589 019
- US-A- 5 709 948

## Description

### TECHNICAL FIELD

The present document relates to a method for coating pipes and particularly, but not exclusively, to apparatus and methods for coating girth welds on oil and gas pipelines.

### BACKGROUND

Pipelines intended for underground installation are typically manufactured in sections that are transported to the destination site and there joined into a continuous pipe by girth welds prior to burial. Since steel pipe generally requires protection from the environment to prevent corrosion, pipe sections are usually provided with a protective coating at the factory. To accommodate the anticipated welding of one pipe section to the next pipe section the protective coating typically does not go all the way to the end of the pipe sections. Typically the coating stops roughly fifteen centimeters from the end of the pipe sections. This leaves the challenge of providing an appropriate corrosion resistant coating over the welded joint and the uncoated area immediately adjacent to the end of the pipe section. This task is particular challenging as it is typically done at the job site rather than at the factory.

It has been proven to be difficult to overcoat the weld joint, raw steel adjacent the weld joint, and the pre-coated portions of the pipe in such a way that the joint has sufficient corrosion resistance. When failure modes are analyzed, an underground pipe is typically much more likely to have failed at or near the joint than anywhere else along its length. Different techniques are known for protecting the weld joints from corrosion. For example, some techniques involve wrapping the joints with sealing tape, adhesive materials, or impregnating the joints with corrosion protective materials. Heat-shrinkable sleeves and sprayable compositions have also been used to protect weld joints from corrosion. In addition, apparatuses have been built to grip a pipe and apply a protective covering to the pipe. For example, see U.S. Patent No. 5,589,019 to Van Beersel et al., EP 1 016 514 (which describes a method and device for wrapping a sheathing around a pipe joint without entrapping air bubbles) and JP 57 193395 (which describes a method for coating synthetic resin on a heated metal tube). However, such apparatuses can be improved upon in terms of their overall effectiveness, ease of use, reliability, and versatility.

One particularly suitable method and material for coating a pipe is described in coassigned U.S. Patent 5,709,948. However, in spite of the advance in the art, there is still a need for more effective methods of applying protective coating on pipes. In particular, there is a need for more effective methods of protecting weld joints at the job site.

### SUMMARY

The present invention provides a method for applying a protective material to a pipe as defined in independent claim 1. Using the method can be used to bond a material to both the exposed steel portion of a pipe and portions of the pipe that have pre-existing protective coatings thereon. The method is particularly suited for covering girth weld of a pipe and the area adjacent the girth weld of the pipe. In some embodiments the area adjacent the girth weld includes pipe surface that is protected by a layer of a semi-interpenetrating polymer network of epoxy and polyolefin resins. The method can in such embodiments be used to apply a protective coating covering different pipe surfaces. In particular, a method of coating a pipe joint comprises movably mounting a protective material applicator over a pipe joint, heating a protective material in an enclosed space to soften the protective material, wherein the protective material comprises a polymeric interpenetrating network coating, and wherein the protective material is heated on both sides at a position adjacent the material's exit from the enclosed space, heating the pipe to a temperature above the melting temperature of the protective material, and moving the applicator circumferentially around the pipe joint while pressing the protective material against the pipe joint.

### DESCRIPTION OF THE DRAWINGS

Figure 1 is a perspeetive view of a pipe coating apparatus mounted to a pipe according to an embodiment of the disclosure;
Figure 2 is a perspective view of the pipe coating apparatus of Figure 1 released from the pipe;
Figure 3a is a front view of a portion of the pipe coating apparatus of Figure 1;
Figure 3b is an exploded assembly view of Figure 3a;
Figure 4 is a perspective view of a pipe surface preparation apparatus mounted to the pipe;
Figure 5 is an assembly view of a portion of a pipe coating apparatus illustrating the embodiment of a quick release mechanism;
Figure 6 is a perspective cross sectional view of a portion of the pipe coating apparatus of Figure 1;
Figure 7 is an end view of the portion of the pipe coating apparatus of Figure 6; Figure 8a is a perspective view of a portion of the pipe coating apparatus shown in a retracted position relative to a mounting frame;
Figure 8b is a perspective view of a portion of the pipe coating apparatus shown in an extended position relative to the mounting frame;
Figure 9a-f depicts an embodiment of the linkage that enables the pipe coating apparatus to be retracted and extended and quickly attached and detached from the mounting frame;
Figure 10 is a bottom perspective view of a pipe surface preparation apparatus of Figure 4;
Figure 11A depicts a high voltage portion of an embodiment of an electrical control system for the device of Figure 1;
Figure 11B depicts a low voltage portion of an embodiment of an electrical control system for the device of Figure 1;
Figure 12 depicts an embodiment of a method of applying a coating material to a pipe; and
Figure 13A-D depicts an exemplary embodiment of a structure that results from execution of the method of Figure 12.

### DETAILED DESCRIPTION

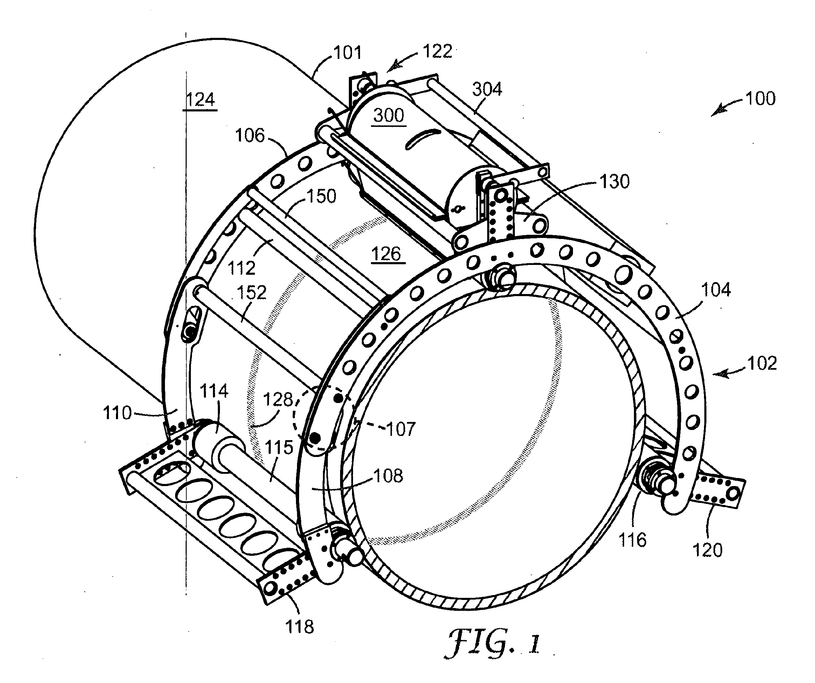

Referring generally to Figures 1-3b an embodiment of a pipe crawling apparatus 100 is shown positioned over a weld joint 128 of a pipe 101. In the depicted embodiment the weld joint 128 is located where two segments 124 and 126 of the pipe 101 have been joined together via welding. The depicted pipe crawler 100 includes a frame 102 with a tool 122 attached thereto. In the depicted embodiment the frame 102 is configured to clamp around a section of the pipe and rotate circumferentially around the pipe 101. While the frame rotates around the pipe, the tool 122 is activated to perform a desired function (e.g. cleaning, roughing, coating).

The frame 102 in the depicted embodiment is composed of two substantially curved members 104 and 106. One end of the frame 102 is configured to pivot towards and away from the other end. In the depicted embodiment the frame 102 extends around 5/8-7/8 of the pipe when it is mounted to the pipe. In alternative embodiments, the frame 102 could extend around more or less of the pipe 101. In the depicted embodiment the frame member are primarily constructed of aluminum. However, it should be appreciated that other suitable material can also be used, for example, steel, polymers, composites, etc. The members 104, 106, 108 and 110 of the frame 102 may be punctured, so as to exhibit holes, in order to reduce the weight of the frame 102. In some embodiments the frame 102 weights less than about 80 pounds and is configured to mount to pipes having diameters between 36-60 inches. In alternative embodiments the weight and size of the frame vary outside of the above values. The frame 102 includes cross members 112 that provide for torsional rigidity, and also serve as a convenient location for handling (e.g., lifting and carrying) of the frame 102.

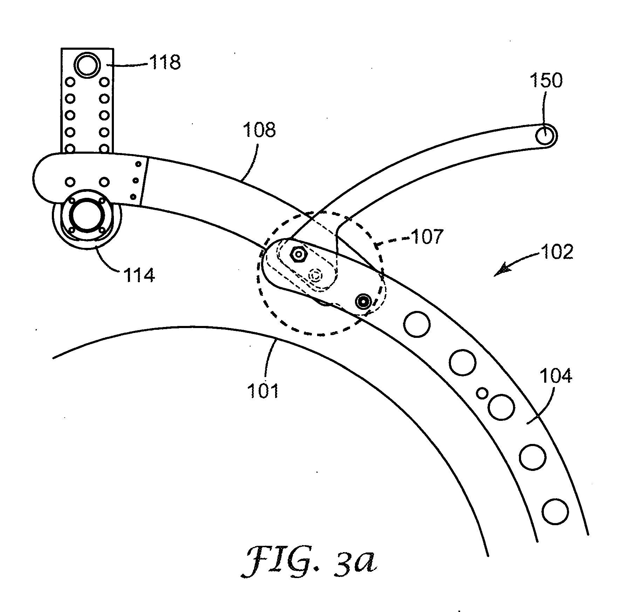

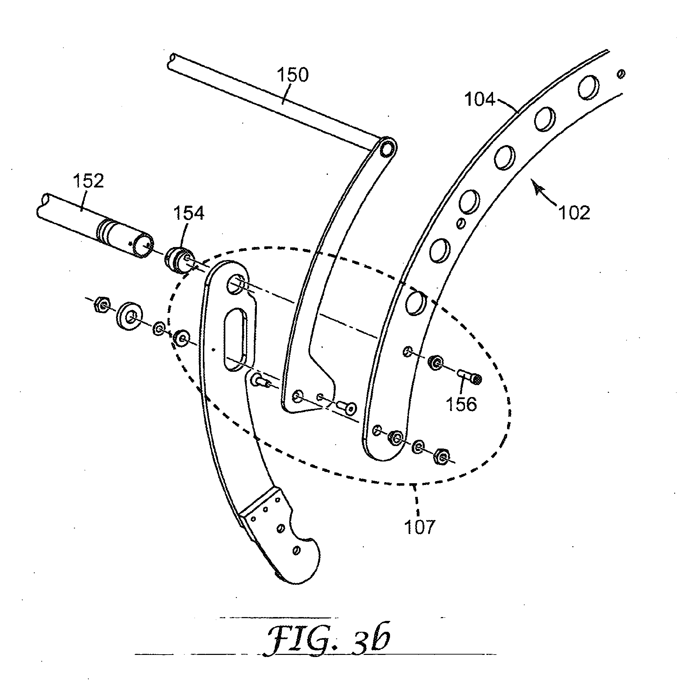

Referring particularly to Figures 3a and 3b, the hinge 107 is configured such that moving the handle 150 towards the pipe 101 causes pivot members 108 and 110 of the frame 102 to pivot towards the pipe 101. In the depicted embodiment the hinge 107 is configured such that when the handle 150 is moved towards the pipe 101 the handle typically stays in a locked position until the user pulls the handle 150 away from the pipe 101. Figures 3a and 3b depict an embodiment of an over center hinge arrangement that provides this auto-locking function. Moreover, in the depicted embodiment, a frame 102 is configured such that rotating the cross member 152 about its axis enables a user to fine tune the fit between the frame and the pipe 101. In the depicted embodiment, the cross member 152 attaches to the pivot member 108 and 110 via fastener 156 and off-center nut 154 (see Figure 3b). This configuration allows the user to adjust the position of the pivot member 108 and 110 by rotating the cross member 152. It should be appreciated that numerous alternative fine adjustment arrangements are also possible.

Referring back generally to Figures 1-3b, rollers 114 and 116 are shown mounted to the ends of the frame 102. In the depicted embodiment the rollers 114 is mounted to the frame 102 via roller frames 118 and rollers 116 is mounted to the frame 102 via roller frame 120. The roller frames 118 and 120 include a plurality of mounting holes 138 that can be aligned with bracket holes 140 on the frame 102 to enable the frame 102 to be adjusted to accommodate various size pipes. In the depicted embodiment, each roller 114 and 116 is shown housed within a roller frame 118 and 120, which, in turn, is mounted to the frame 102 of the pipe crawler 100. In the depicted embodiment, one of the rollers 114 or 116 is driven by a motor. The motor for driving a given roller 114 or 116 is housed within the roller frame itself. In an alternative embodiment, both rollers 114 and 116 are driven by motors. In should be appreciated that in alternative embodiments, any number of rollers can be used and they can be driven by motor or manually powered. It should also be appreciated that some embodiments of the frame 102 may not include rollers.

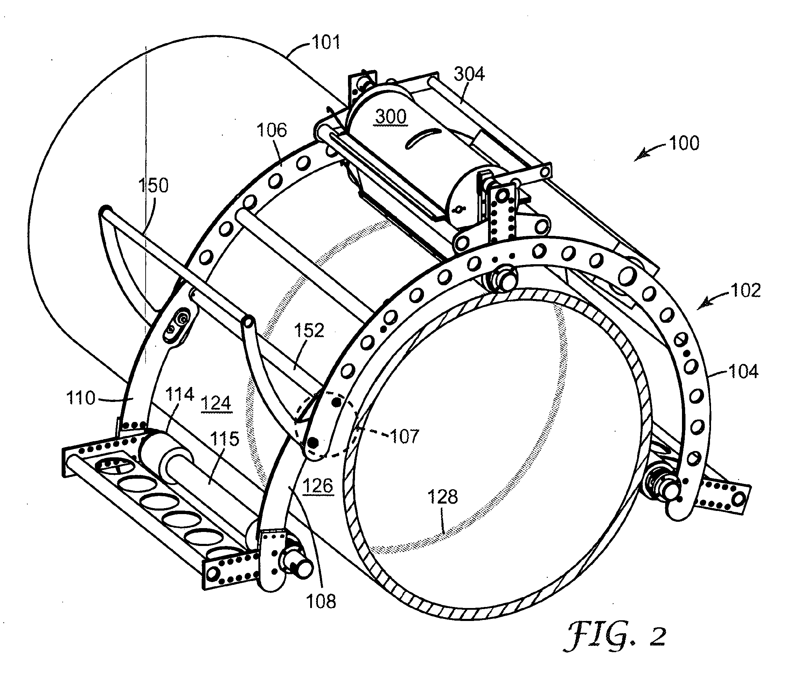

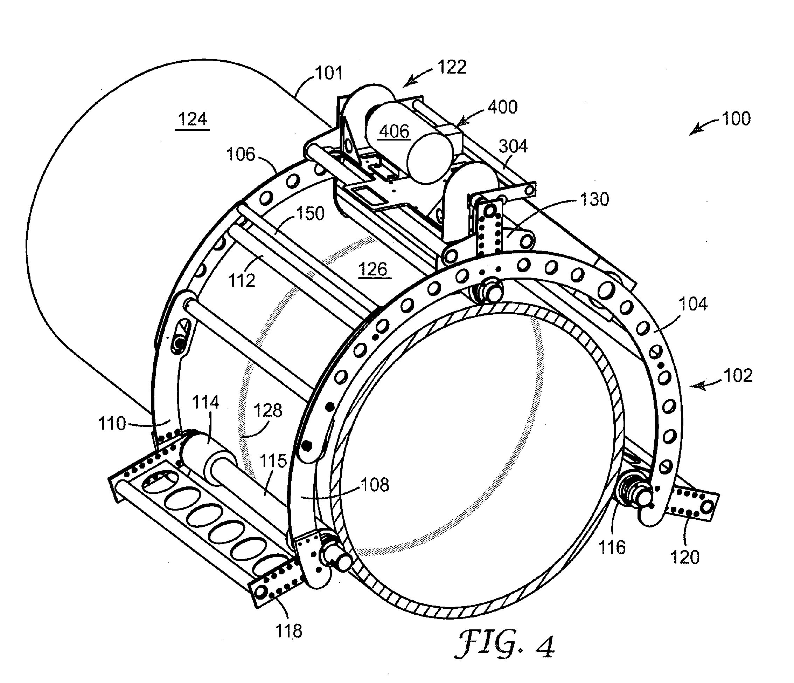

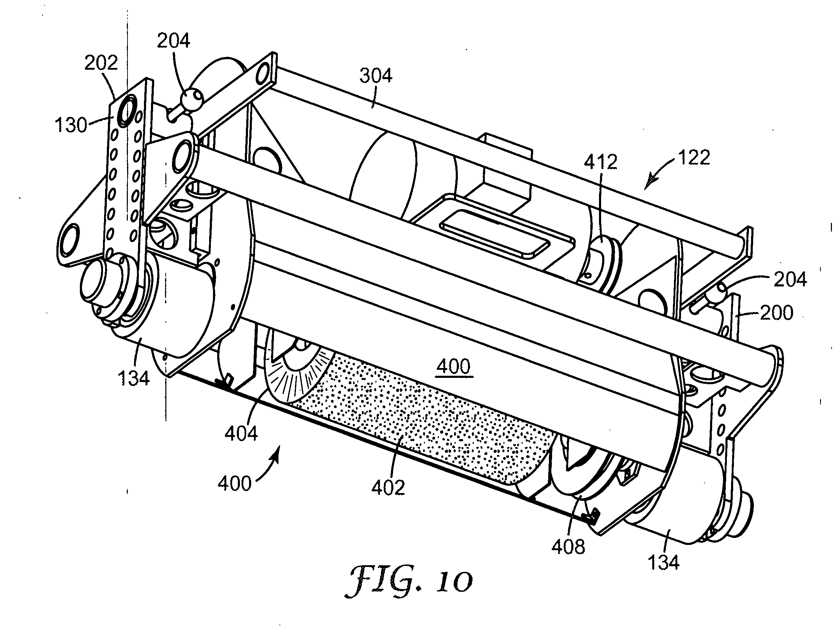

In the depicted embodiment a tool 122 is shown mounted toward the middle of the frame 102 for performing work upon the pipe 101. As described above, the tool 122 in the depicted embodiment can be used for many purposes including, for example, preparing the surface of the pipe (e.g., cleaning, roughing), or coating the pipe. The tool 122 depicted in Figures 1 and 2 is an applicator 300 whereas the tool 122 depicted in Figures 4 and 10 is a surface preparation device 400. Both the surface preparation device 400 and the applicator 300 will be described in greater detail below. In the depicted embodiment when one or both of the rollers 114 and 116 begin to rotate under power of the one or more motors, the pipe crawling apparatus 100 travels around the circumference of the pipe. As the pipe crawling apparatus 100 travels around the pipe 101, the tool 122 can perform work on the portion of the pipe facing the tool 122. In the depicted embodiment the pipe crawler 100 is centered over the weld joint 128, therefore, the tool 122 performs work upon the weld joint 128 and the regions of pipe 101 immediately surrounding it. It should be appreciated, that the apparatus 100 can be used to perform work along any portion of the pipe 101. It should also be appreciated that the alternative embodiment of the depicted apparatus can have uses other than moving a tool 122 around a pipe 101.

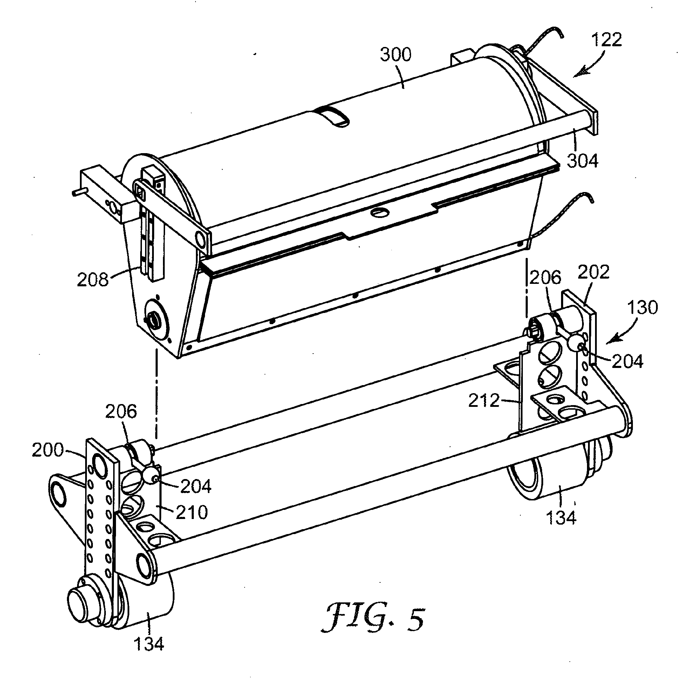

Referring to Figures 1, 2, 4, 5 and 10, the tool 122 is shown connected to the frame 102 via a quick release mounting assembly 130 (also interchangeably referred to herein as the tool or device frame). As discussed above the tool 122 of Figures 1, 2 and 5 is an applicator 300 for applying a protective material to an outer surface of a pipe 101 and the tool 122 of Figures 4 and 10 is a surface preparation device 400 for preparing the surface of the pipe for cleaning and otherwise preparing the surface of the pipe for further processing. Referring particularly to Figure 5, the quick release mounting assembly 130 includes mounting brackets 200, 202 that include a plurality of aperture that can be aligned with aperture on the frame 102 to enable the position of the tool 122 to be adjusted relative to the frame 102. The mounting bracket configuration allows the system to be attached to a variety of different size pipes.

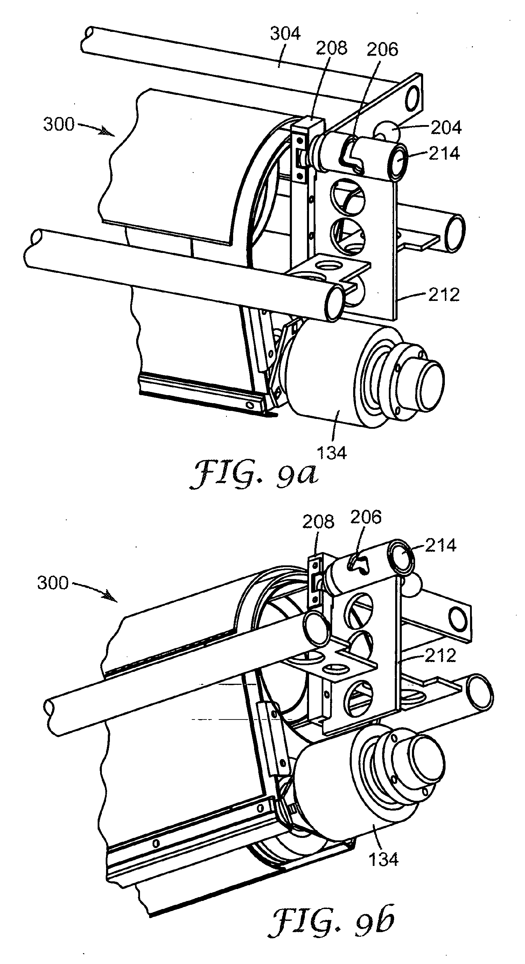

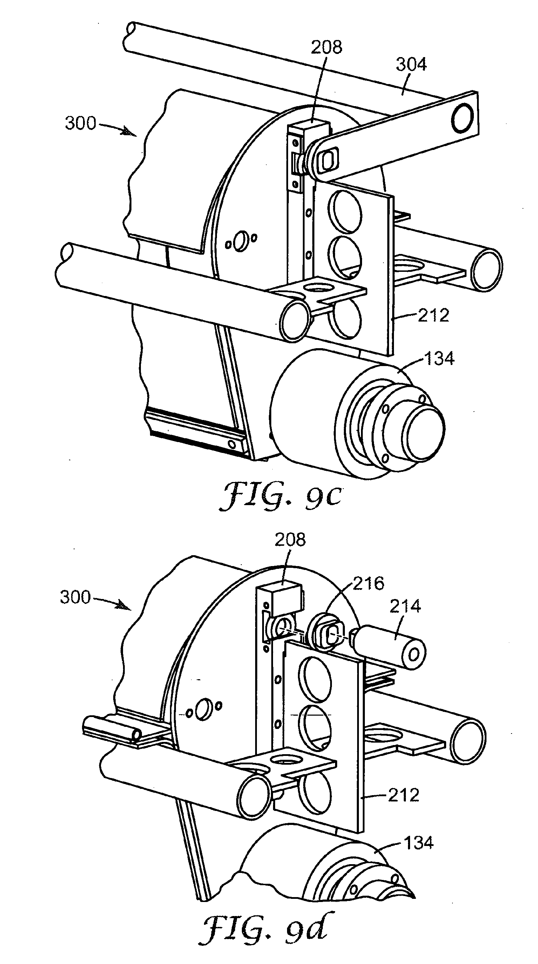

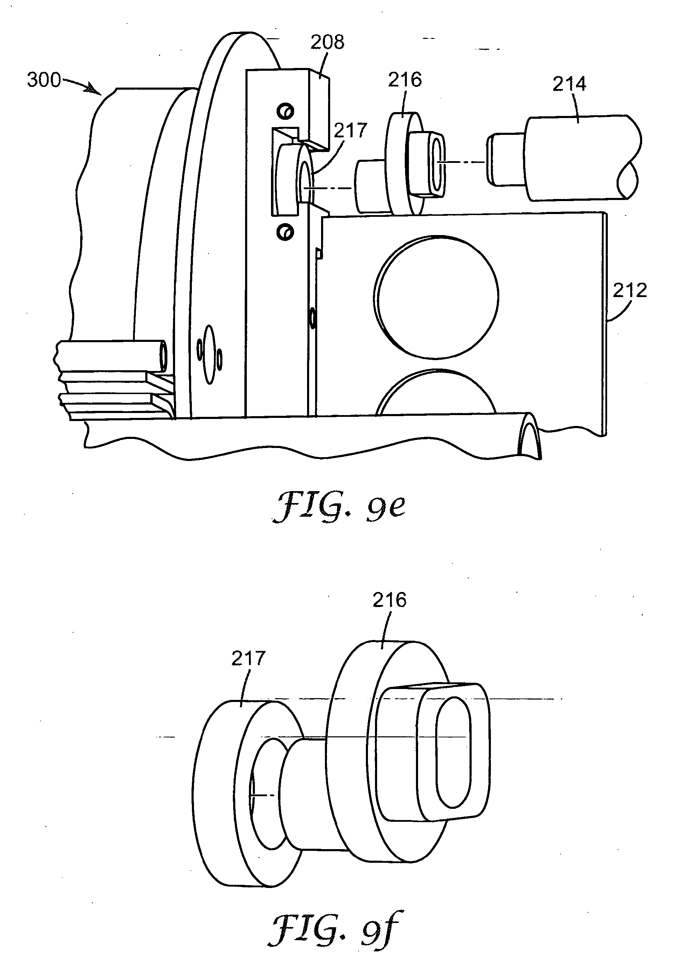

In the depicted embodiment, the quick release mounting assembly 130 also includes a configuration whereby the tool 122 can be released from the mounting assembly 130 without the use of tool. In the depicted embodiment the tool 122 can be unlocked from the mounting assembly by moving the knobs 204 from a first position to a second position. The knobs 204 are shown in the first position in the depicted figures. The second position is the position that the knob 204 would be at if they were moved to the opposite end of the channel 206 (see Figures 5, 9a, and 9b). Moving the knobs 204 to the second position retracts the pins 214 thereby pulling the connecting member 216 away from the housing of the tool 122 (Figures 9e and 9f). The connecting member 216 will be described in greater detail below. Once the tool 122 is unlocked from the frame of the mounting assembly 130, the tool 122 can be slid away from the frame of the quick release mounting assembly 130. In the depicted embodiment the tool includes guide rails 208 on either end of the tool 122 that are configured to slidably receive alignment rails 210, 212 that are connected to the mounting bracks 200, 202. The quick arrangement 130 enables the applicator 300 and the surface preparation device 400 to be swapped quickly and easily. It should be appreciated, not all embodiments of the disclosure include a quick release mounting assembly and in embodiments that do include such an assembly many other alternative configurations are also possible.

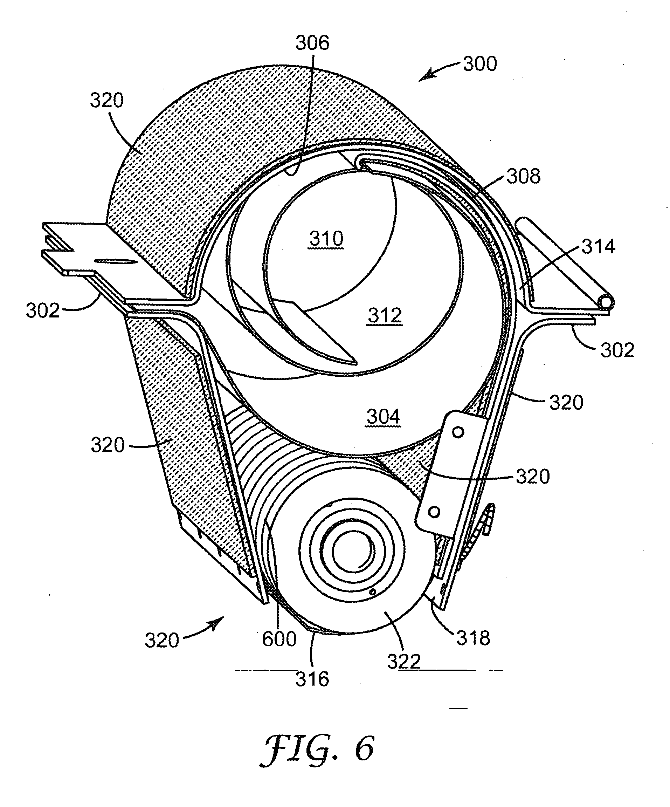

Referring to Figures 6-7, the applicator 300 is shown in greater detail. In the depicted embodiment the applicator 300 includes a housing 302 to which three curved surfaces 304, 306 and 308 are anchored. The curved surfaces 304 and 306 cooperate to form a region 310 in which a coiled sheet of coating material 312 is housed. The sheet of coating material 312 is polymeric, such as a polymeric interpenetrating network coating (PINC), such as those that are described in U.S. Patent No. 5,709,948, titled Semi-interpenetrating polymer networks of epoxy and polyolefin resins, methods therefor, and uses thereof. The curved surfaces 306 and 308 also form a channel 314 through which the sheet of coating material 312 may be strung. Thus, a distal end 316 of the sheet of coating material 312 exits the channel 314 at a slot 318. Stringing of the sheet of coated material 312 may be accomplished by insertion of a fmger through slot 301 in the housing 302 (visible in Figure 3); the individual's finger may engage the material 312 and advance it through the channel 314.

The applicator includes one or more heating blankets 320. Each heating blanket 320 generates heat when an electric current is passed through it. According to some embodiments, the applicator 300 may include but a single heating blanket 320. According to other embodiments, the applicator 300 may include two, three, four, or more heating blankets 320. In the particular embodiment depicted in Figures 6-7, the applicator 300 includes four heating blankets 320. As can be seen in Figure 3, the heating blankets 320 may be affixed to each of curved surfaces 306 and 308 that form the channel 314, thereby heating both sides of the sheet of coating material 312 as it travels through the channel 311 to the slot 318. According to some embodiments, each of the heating blankets 320 may be individually controllable, so that one heating blanket 320 may be driven with a first current, and thereby reach a first temperature, while a second heating blanket 320 may be driven with a second current and thereby reach a second temperature. According to some embodiments, a pair of heating blankets most proximal to the slot 318 may from oven for heating the coating material 312 to a temperature just below its melting point, immediately prior to its exit through the slot 318. Another pair of heating blankets 300 that are more distal from the slot 318 may form a pre-heat oven to warm the sheet of coating material 312 to a temperature chosen so that, as the material 312 passes through the main oven it is able to reach the desired temperature by the time it exits the slot 318. Such an arrangement may be useful, for example, in particularly cold environments.

During operation, the applicator 300 is oriented/centered over the weld joint 128, as shown in Figure 1 (one must assume that the device 122 therein is an applicator 300, rather than a Roto Peen™). The sheet of coating material 312 is strung through the channel 314 as shown in Figures 6-7, so that its distal end 316 emerges from the slot 318, and enters a nip created by an application roller 322 and the pipe, i.e., the application roller 322 rolls along the surface of the weld joint 128, and the exposed and surrounding regions of pipe, and the coating material 312 is compressed between the application roller 322 and the pipe. In one embodiment an electrical current is passed through the heating blankets 320, so as to warm the coating material 312 to a temperature just below its melting point. According to one embodiment where a variety of PINC is used as the coating material 312, the heating blankets 320 cooperate to warm the coating material 312 to a temperature of approximate 160 °C (320° F). Thus, as the sheet of coating material 312 exits the slot, it is pliable, and able to conform to the surface of the pipe, which may exhibit irregularities.

According to one embodiment as the coating material 312 contacts the pipe, it is further heated, as the pipe is induction heated immediately prior to operation of the pipe crawler/applicator. The pipe is induction heated to a temperature equal to or greater than the melting point of the coating material 312. Consequently, as the coating material 312 contacts the pipe, it is nipped between the application roller 322 and pipe, and is thereby applied to the surface of the pipe, where it melts and sticks/bonds to pipe. As the pipe crawler advances around the circumference of the pipe, the material 312 unwinds and continues to advance through the channel 314, meaning that the pipe crawler 100 leaves a strip of coating material bonded to the pipe, in its wake. In the depicted embodiment, the weld joint 128 and exposed regions of the pipe are thereby covered with the coating material, without the use of an adhesive. The pressure exerted against the coating material 312 by application roller 322 performs the additional function of removing any air bubbles that may be trapped between the coating material 312 and the surface of the pipe.

Still referring to Figures 6-7, according to some embodiments, the surface of the applicator roller 322 may include grooves 600 that extend around the circumference of the roller 322. It has been found that it is advantageous when the application roller 322 has a substantial compliance to accommodate regions of different height, e.g. the weld ridges versus the regular surface of the pipe. One way of accomplishing this is to provide the application roller 322 with the aforementioned plurality of circumferential grooves 600. Another way of accomplishing this is by providing the application roller 322 with a very compliant layer, possibly with a thin surface layer that is less compliant but more abrasion resistant. One alternative is a roller having a soft rubber outer surface, around 15 to 30 Shore A, having a thickness of 12 mm. This outer surface of the embodiment has circumferential grooves, 8 mm deep and 6 mm wide, spaced every 8 mm apart across the width of the roll. It is contemplated that many other configurations may be used for the application roller 322. In particular, it is contemplated that an application roller having an outer surface formed from closed cell silicone sponge tube covered by a solid silicone sleeve having a durometer of about 60 Shore A would be suitable. Such a construction is available from, for example, Ipotec, of Exeter, NH. Although not visible in Figure 6, the application roller 322 may include a plurality of longitudinal voids that penetrate the roller 322 substantially throughout the length of the roller 322, thereby rendering the roller 322 even more pliable. In some embodiment the outer diameter of the application roller is between about 5,08-25,4 cm (2-10 inches).

Referring back to Figure 1, it can be seen therein, that each of the drive rollers 114 and 116 has a recessed surface, so that only the end regions contact the pipe. The recessed regions 115 do not contact the pipe. Thus, in the depicted embodiment, the drive rollers 114 and 116 do not make contact with the weld joint 128, which is oriented under the recessed regions 115 of each drive roller 114 and 116. This arrangement has the advantage of not having the drive rollers 114 and 116 exert further pressure upon the warm, already-applied coating material 312. In some application, such additional pressure can cause the coating material 312 to "mushroom," or to push the uneven surfaces weld joint 128 through the coating material 312.

### Engaging/Disengaging the Pipe Crawler and Pipe

As shown in Figure 1, the pipe crawler 100 is mounted on, i.e., engaged with, the pipe. In this configuration, the drive rollers 114 and 116 and the application roller or peripheral rollers 134 (discussed further, below) are contacting the pipe. When engaged with the pipe, approximately 110° separate the drive roller 114 and the tool 122, and 110° separate the tool 122 from the other drive roller 116. Because the pipe crawler 100 makes contact with the pipe at three points that encompass more than 180° of an arc of the pipe, the pipe crawler 100 is fastened to the pipe, and will not fall off.

As mentioned previously, the frame 102 includes a self-locking system of hinges 107 that permit the rotatable members 108 and 110 to rotate in the direction indicated by the arrow 132. The hinge system 107 is controlled by a handle 150. As discussed above, Figure 1 depicts the handle is in the "down" or "locked" position, and the rotatable members 108 and 110 of the frame 102 are locked in place. When rotated to the "up" or "unlocked" position, the handle 150 manipulates the hinge system 107, so as to cause the rotatable members 108 and 110 to swing outwardly, away from the pipe. The frame 102 then exhibits an opening greater than the diameter of the pipe. In this way, the pipe crawler 100 may be disengaged from the pipe.

To engage the pipe crawler 100, the handle 150 is rotated to the aforementioned "up" position, so that the rotatable members 108 and 110 are swung outwardly, and the frame 102 presents an opening larger than the diameter of the pipe. In this configuration, the pipe crawler 100 is placed upon the pipe. Next, each of the roller frames 118, 120 and tool frame 130 are adjusted to accommodate the diameter of the pipe. For example, turning to roller frame 118 it can be seen that the frame 118 includes a plurality of holes. The frame 118 (and therefore the roller 114) may be advanced or withdrawn toward or away from the pipe, by selecting which of the pair of frame holes is to be aligned with a corresponding pair of bracket holes. After such selection, a threaded fastener is passed through the aligned frame and bracket holes. (The other roller 116 and tool 122 are similarly mounted on frames 120 and 130 having holes with the same pitch, and a corresponding selection should be made, e.g., if the *n^{th}* pair of hole is selected for alignment on roller frame 118, then the *n^{th}* pair of holes should be selected on frames 120 and 130). Adjustment of the frames 118, 120, and 130 constitutes a rough adjustment for the diameter of the pipe.

After performing the aforementioned rough adjustment, a fine adjustment may be made. As discussed above, the fine adjustment is made by loosening bolt 156 (Figure 3b), which permits member 152 to rotate about its longitudinal axis. Rotation of member 156 causes rotation of a cam, which, in turn, causes rotatable members 108 and 110 to rotate toward the pipe. Member 152 may be rotated until the rollers 114 and 116 exert the desired degree of pressure upon the pipe. At this point, the bolt 156 may be tightened, and the handle 150 is rotated to the "down position," thereby locking the pipe crawler 100 on the pipe.

### Starting/Stopping the Pipe Crawler

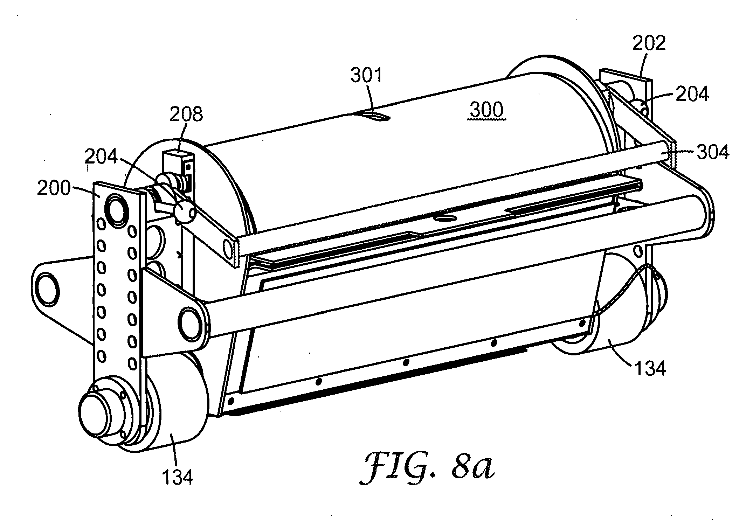

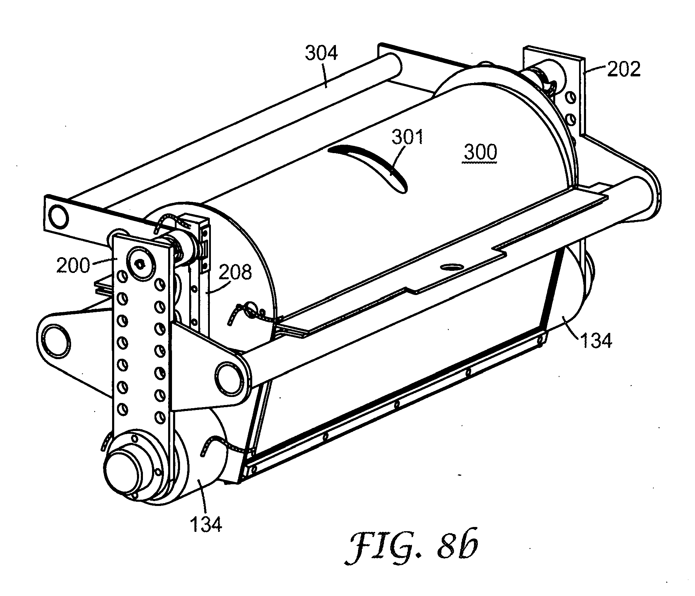

Stopping the operation of the pipe crawler 100 presents a challenge, namely, that should the advancement of the pipe crawler 100 be halted so that it can be disengaged from the pipe (as described above), the result is that the oven in the applicator 300 remains in place over a given local, until the pipe crawler 100 is disengaged. Hence, the oven tends to provide excessive heat to the local over which it is oriented, thereby tending to melt the coating material located on the pipe directly beneath the pipe crawler 100. This can result in a flat spot on the protective coating. To avoid the flat spot, the tool 122 is slideably mounted within the frame. In the depicted embodiment, the application roller 322 is distinct from the peripheral rollers 134. When the applicator 300 is applying protective coating to the surface of the pipe, the application roller 322 and peripheral rollers 134 are colinear, and operate as a single roller. However, the applicator 300 may be withdrawn from the pipe 101 and peripheral rollers 134 by rotation of the handle 304 (see Figures 8a and 8b). Thus, to stop the operation of the pipe crawler 100, the following steps may be taken. Initially, while the pipe crawler 100 is advancing around the circumference of the pipe and laying a protective coating, the handle 304 should be rotated to a disengaging position shown in Figure 8a. Such rotation causes the applicator 300, including the application roller 322, to withdraw from the pipe. Notably, the peripheral rollers 134, which are fastened to the device frame 130, remain in place. Thus, the pipe crawler 100 maintains three points of contact with the pipe, even though the applicator and its roller 322 have been withdrawn. By virtue of having withdrawn the applicator 300, the region of pipe directly beneath the applicator 300 is no longer subject to excessive heat. Next, the advancement of the pipe crawler 100 may be halted. For example, the pipe crawler 100 may be stopped by selection of an on/off switch to an off position, or the advancement may be halted by use of a remote control. After having halted the pipe crawler, the pipe crawler 100 may be disengaged from the pipe, as described above.

To initiate operation of the pipe crawler, the pipe crawler may be engaged with the pipe, as described above. Then, the aforementioned handle may be pushed into the "engaged" position, thereby advancing the applicator 300 (chamber 310, oven and application roller 322) toward the pipe and peripheral rollers 134, so that the application roller 322 becomes colinear with the peripheral rollers 134. The engaged position is shown in Figure 8b. At this point, the advancement of the pipe crawler 100 is initiated. Again, this may be accomplished by selection of an on/off switch to the "on" position, or by remote control, etc. Next, while the pipe crawler 100 is in motion, the operator may insert his or her finger into the slot 301 defined by the housing 302 of the applicator, in order to contact the sheet of coating material 312. Using his finger, the operator advances the coating material 312 through the channel 314, until the distal end 316 of the sheet 312 exits the slot 318 and is nipped between the roller 322 and the pipe. Thus, the pipe crawler progresses around the circumference of the pipe, leaving a strip of protective coating stuck to/bonded to the pipe in its wake.

Figure 9a-9f further illustrates one embodiment of the mechanism, which enables . the applicator 300 to be easily moved towards and away from the pipe 101 relative to the peripheral rollers 134. The connecting member 216, that was described above in the context of the quick release functionality of the frame 130 also plays a roll in the retracting and extending functionality of the frame 130. In the depicted embodiment the connecting member 216 rotates when handle 304 is rotated. One end of the connecting member 216 engages a ring 217 in an off axis arrangement such that when the connecting member 216 rotates in a first direction it raises the ring 217 and when it rotates in a second direction in lowers the ring 217. In the depicted embodiment the ring 217 is movably mounted to the guide 208 which is attached to the applicator 300 and the connecting member is movably mounted to the frame 130. The above described arrangement enables the tool 122 (e.g., the applicator 300) to be raised and lowered relative to the frame 130.

Referring to Figure 10, the surface preparation device 400 of Figure 4 is shown and described in greater detail. The surface preparation device 400 is an example of a tool 122. In depicted embodiment the surface preparation device 400 includes a rotating cleaning unit 404 commercially available from 3M Corporation under the trade name Roto Peen™. The Roto Peen™ contains a plurality of abrasive pads 402 (e.g., carbine disks) flexibly coupled to an axle that is rotated (e.g., pneumatically, hydraulically, by a motor, etc.). As the axle rotates, so too do the pads 402. The pads 402 thus strike the pipe 101, thereby removing surface contaminants and in some cases roughing the pipe surface. In the depicted embodiment the rotating cleaning unit 404 is driven by a cleaning unit motor 406 via a belt and a pair of pulleys 412, 410. By activation of the motor driving the pipe crawler 100 and the motor 406 driving the rotating cleaning unit 404, the pipe crawler 100 may travel a full 360° around the circumference of the pipe, and may thereby clean and rough the entire weld joint 128 and portions of the pipe 101 on either side of the weld joint 128. The surface preparation device 400 is shown mounted within a housing that is similar to the housing described above with reference to the applicator 300. This enables the surface preparation device 400 to be quickly and easily exchanged with the applicator 300.

Though in the depicted embodiment only one tool 122 is shown connected to the frame 102 at one time, it should be appreciated that multiple tools 122 could be connected to a single frame 102. For example, in an alternative embodiment a surface preparation device 400 and an applicator 300 could both be connected to the frame 102 at the same time. In another alternative embodiment, two or more applicators 300 could be connected to a single frame 102 so that two or more layers of material can be applied to the pipe in a single rotation of the crawler 100. In some embodiment the two or more layers can be of different composition (i.e., abrasion resistance fibers, moisture repellant coatings) and geometric configurations (e.g., widths and thicknesses). Using two applicators 300 instead of one can better enable two layers of materials to be applied to the pipe while both layers are soft.

### Electrical Control System

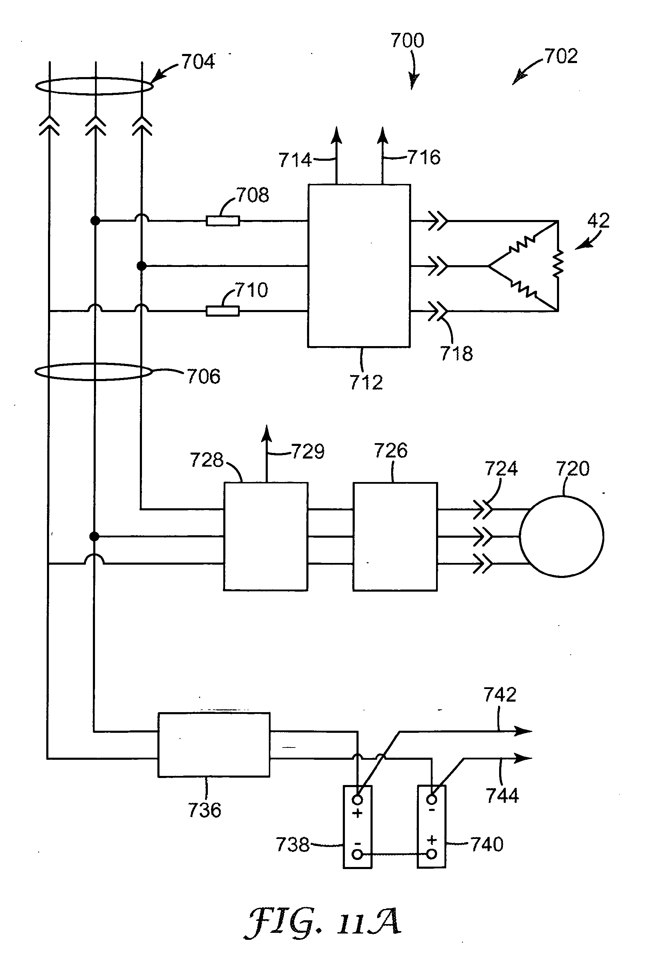

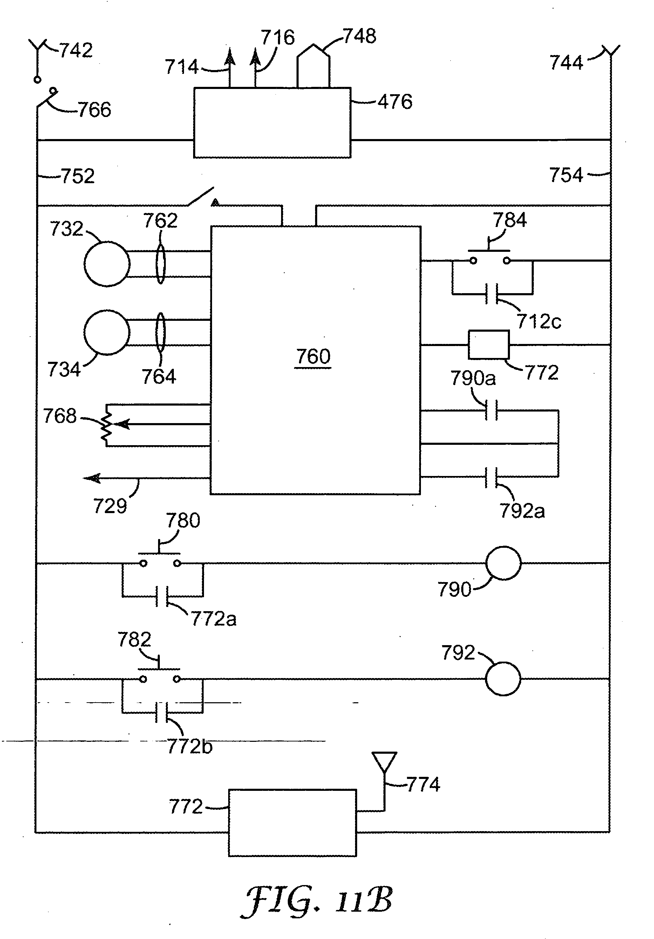

Referring now to Figure 11A, the high voltage portion 700 of an exemplary electronic control system 702 suitable for controlling the apparatus of Figure 1 is illustrated. The high voltage portion 700 is conveniently adapted to connect to an external source 704 of 250 volt, 3-phase electrical energy such as is provided by many commercially available portable generators. The 3 phase mains 706 are connected via fast acting fuses 708 and 710 to a solid state relay 712. A solid state relay such as the Din-A-Mite style B, commercially available from Watlow of Winona, MN, is considered suitable. The solid state relay 712 is regulated by control impulses on lines 714 and 716 from the low voltage portion (depicted on Figure 11B) as will be described in more particularity in connection with Figure 11B below. The 3-phase power regulated by the solid state relay 712 is connected to the heating blankets 320, conveniently via quick-disconnect connectors 718. If additional blankets 320 are present, as will be the case in many preferred embodiments, they can be operated in parallel from the mains as the skilled artisan will readily appreciate.

The mains 706 can also be used to run auxiliary equipment that may optionally be mounted on the pipe crawler 100. For example, it is often convenient to clean and roughen the surface of the pipe after girth welding but before the application of wrapping material in order to remove oxides and promote good bonding. To accomplish this expeditiously, a ganged abrading or peening tool can be mounted on the frame 102. The motor for such an auxiliary appliance is conveniently connected to the mains 706 by quick disconnects 724. When such equipment is present, it is often desirable to protect the motor with an overload protector 726 and/or a interlock 728 that prevents the motor from being operated when the drives 732 and 734 (seen in Figure 11B) for drive rollers wheels 114 and 116 (seen in Figure 1) are operating in a direction contrary to the natural rotation of the abrading or peening tool. Inhibit line 729, going to the low voltage motor control 760 exerts this control as will be discussed with more particularity below.

In the illustrated embodiment, the mains 706 are connected to a power supply 736 for the low-voltage portion. The power supply 736 is conveniently arranged to charge a pair of e.g. 12 volt batteries 738 and 740 that are series connected to provide 24 volts DC on terminals 742 and 744. It is considered particularly suitable to use high-amperage, long life cells such as the Energy Odyssey PC310 batteries commercially available from BatteryMart of Woodbury, MN. It is believed that in typical field use, the power supply can advantageously be an 8 ampere, 24-volt charger such as the model 2416SRF commercially available from Soneil of Ontario, Canada.

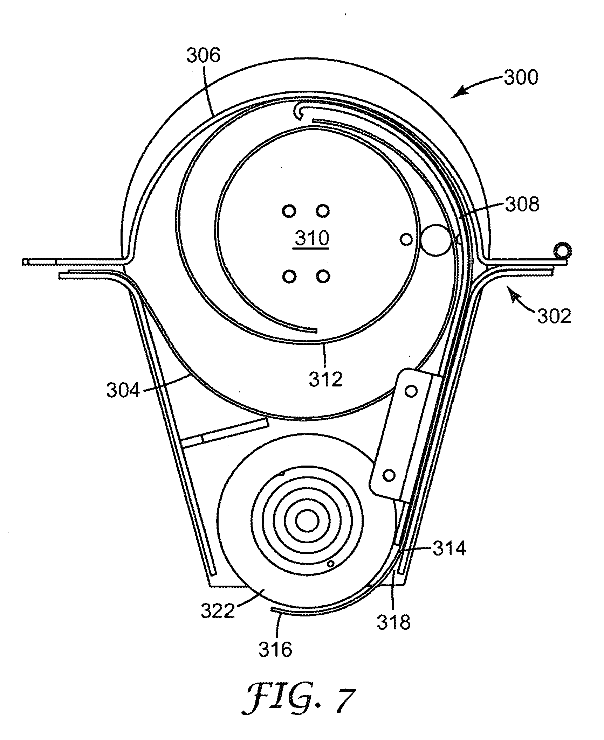

Referring now to Figure 11B, the low voltage portion of an exemplary electronic control system 702 suitable for controlling the apparatus of Figure 7 is illustrated. The positive and negative buses, 752 and 754 respectively, are connected to terminals 742 and 744 (and from there to the batteries 738 and 740 on Figure 11A as discussed above.) A heater controller circuit 746, conveniently the model SD6C, commercially available from Watlow of Winona, MN, is present to provide closed-loop control for the heating blankets 320. A heat sensor 748, conveniently a thermocouple, is positioned so that it can sense the temperature of the heating blankets 320. Control is exerted on lines 714 and 716 (that also appear on Figure 11A) to solid state relay 712.

Conveniently, the drives 732 and 734 are on the low voltage portion, although this is not a requirement. It is considered convenient for the drives 732 and 734 to be capable of both forward and reverse operation around the pipe, if for no other reason than conveniently unwinding the cord supplying the high voltage portion 700 from around the pipe. A motor controller 760, such as the KBBC-Micro commercially available from KB Electronics of Coral Springs, FL, is conveniently employed to coordinate the control functions, and power to the drives 732 and 734 conveniently derive from the motor controller via lines 762 and 764. Main power to the motor controller is provided through a main on/off switch 766. Speed control is conveniently accomplished via a variable resistor 768 connected to the motor controller 760. The motor controller also conveniently has a fault condition indicator 770. The inhibit line 729 is active when then drive is operating in the reverse direction.

It is also considered convenient to have the drives be operable from both manual controls on the unit, and from a wireless remote control. A wireless receiver 772 may be present; a suitable wireless receiver can be adapted from a commercially available garage door controller such as model RA-423LM, commercially available from Chamberlain Group of Elmhurst, IL. Since the ferrous bulk of the pipe is a substantial barrier to radio waves, it is considered convenient to provide an antenna 774 that extends a good way around the frame 102 so the pipe crawler 100 can respond to radio signals in any orientation around the pipe.

The wireless receiver 772 includes three normally open switches 772a, 772b, and 772c that close upon receipt of radio signals from a transmitter that signify requests for the conditions of forward drive, reverse drive and stop. Wired in parallel with normally open switches 772a, 772b, and 772c are manual control switches 780, 782, and 784 respectively that can independently mediate the conditions of forward drive, reverse drive and stop.

It may be convenient to route each of the forward and reverse signals through a relay. The forward relay has a normally open contact 790a that closes when coil 790 is energized (these components are depicted as separated to reduce the complexity of the drawing). The reverse relay also has a contact normally open contact 792a that closes when coil 792 is energized (also depicted as separated.) Momentary closure on contacts 790a and 792a is sufficient to activate the forward and reverse modes respectively; the motor controller 760 can be configured to latch these modes based on a momentary contact signal.

### Operation

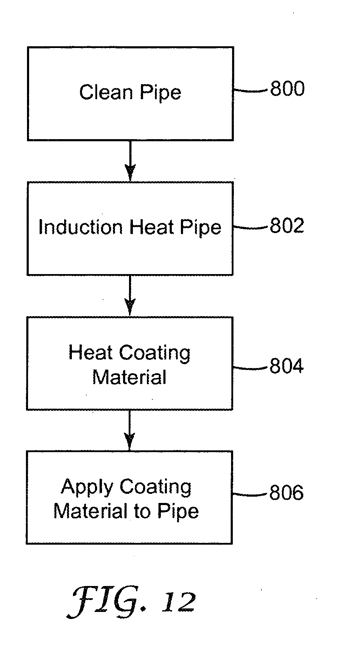

The general operation of applying the coating material to a pipe according to an embodiment of the disclosure is shown in Figure 12. Initially, the region of pipe that is to be coated is cleaned, as shown in operation 800. The pipe may be cleaned with the surface preparation device 400, as described above, with a cleaning solution, or in any other suitable manner. Typically, the region to be cleaned includes the weld joint 128, and the exposed regions of pipe (usually about 15 cm. of pipe in either direction from the weld joint).

After the pipe is cleaned, the pipe is induction heated, as shown in operation 802. The pipe is to be heated to a temperature that is equal to or greater than the melting point of the coating material to be applied to the pipe. For example, the pipe may be heated to a temperature of about 232,2 °C (450° F) if PINC is used as the coating material. If the coating material is a laminate (discussed below), then the pipe should be heated to a temperature equal to or greater than the melting point of the bottom layer of the laminate. It is to be understood that the pipe may be heated in ways other than induction heated, as well, as long as the region to which the coating is to be applied reaches the desired temperature. Thereafter, the coating material to be applied to the pipe is heated to a temperature just below its melting point, as shown in operation 804. Typically, the coating material is a variety of PINC, but other coating materials may be used. In general, the coating material is a material that lacks an adhesive, and is polymeric. Upon application (operation 806), the material softens, conforms to the surface of the pipe (usually with the aid of an application roller), and is thereby strongly stuck or bonded thereto. In should be appreciated that alternative embodiment may include adhesives.

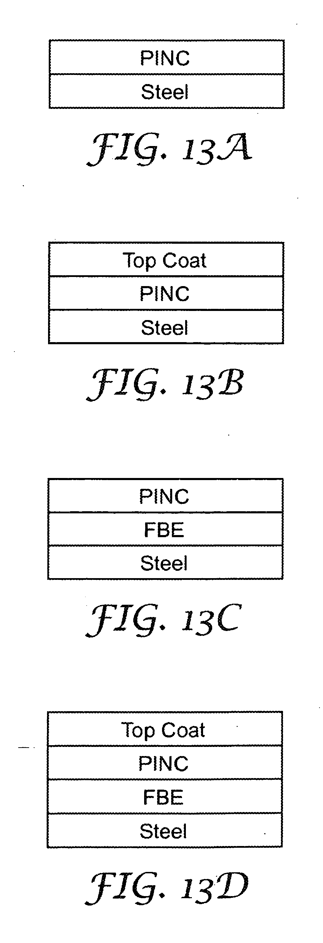

One possible result of the preceding operations is shown in Figure 13A. As can be seen, the resulting structure is a pipe with a layer of coating material (in the embodiment of Figure 13A, PINC) applied directly thereto. No adhesive is present.

In some instances, it may be preferable to use a laminate coating material. For example, a top coat may be applied over the coating material. Where the coating material is a variety of PINC, the top coat serves to protect the PINC from ultraviolet radiation. The two materials may be applied to the pipe at the same time, with the coating material softening, and adhering to both the pipe and the top coat upon application to the pipe. One exemplary useful top coat for use with PINC is MOPLEN™, which is a polypropylene based material, commercially available from Basell. The inventors of the present subject matter have tested MOPLEN™ as a top coat over PINC, and have found that it withstands temperatures as low as -25,6 °C (-50° F) without cracking. Figure 13B depicts the structure that results from use of a top coat with the coating material.

In some cases, it may be useful to treat the pipe with a fusion-bonded epoxy (FBE), prior to application of the coating material. Figures 13C and 13D depict the resulting structure, when only a coating material is applied (Figure 13C), and when a coating material and top coat is applied (Figure 13D).

### EXAMPLE

Two sections of 30 inch (76.2 cm) outside diameter pipe made from 0.5 inch (12.5 mm) thick steel were joined by means of a circumferential weld. The weld had a height of 6 mm. An additional weld of approximately the same height was made on the outside surface of one of the sections in a direction parallel to the long axis of the pipe in order to simulate pipe made by rolling and welding.

The ends of the welded pipe were coated with a 0.06 inch (1.5 mm) thick layer of a semi-interpenetrating polymer network of epoxy and polyolefin resin, generally as described in copending and coassigned U.S. Patent application 60/707332, "Method and Kit for Providing Interpenetrating Polymer Network as Coating for Metal Substrate," Perez et al. The coating ended so as to leave a gap of exposed steel approximately 6 inches (15.20 cm) wide on either side of the girth weld. This experimental set up approximated the situation of a field weld having just ben completed on steel pipe treated with Scotchkote™ 224N corrosion protection compound, commercially available from 3M Company of St. Paul, MN. The steel in the exposed gap was then cleaned and roughened with a Roto Peen™ flap wheel, commercially available from 3M Company of St. Paul, MN

A wrapping apparatus generally as illustrated in Figure 1 and described above was constructed. The film magazine was loaded with a roll of film 25 mils (0.64 mm) thick and 6 inches (15.3 cm) wide, composed of the same semi-interpenetrating polymer network of epoxy and polyolefin resin as described above as coating the pipe ends. The gap oven was supplied with two 600 watt blanket heaters as the first and second heaters, commercially available as catalog number SHSO1300 from Tempco of Wood Dale, IL. A pre-heater was present, provided with two 1300 watt blanket heaters as the first and second pre-heaters, commercially available as catalog number SHSO1299 from Tempco. The heaters in the gap oven were set to heat the pipe-facing side of the film to 160 °C and the outside-facing side of the film to 140 °C. The laydown roller had a soft rubber outer surrounding a steel shaft. The outer had a durometer of 20 to 30 Shore A, having a thickness of 12 mm. This outer had circumferential grooves, 8 mm deep and 6 mm wide, spaced every 8 mm apart across the width of the roll.

The welded pipe was then exposed heat energy from six 3000 watt heaters, each 6 inches wide by 20 inches long (15.3 cm by 50.8 cm) commercially available from Tempco of Wood Dale, IL, positioned so as to heat up the pipe from the inside out. The wrapping apparatus was then clamped onto the pipe and activated to dispense heated film from the magazine onto the heated surface of the pipe, centered on the joint. The drives were set to propel the apparatus at a circumferential speed of 7.6 cm/sec. When the joint was completely wrapped once, the apparatus was halted and removed from the pipe. The pipe was allowed to cool to room temperature and then inspected visually. It was observed that the coating was a very uniformly deposited protection that adhered not only to the cleaned steel but also to the previously applied protective coating on either side of the cleaned area.

While the invention has been particularly shown and described with reference to various embodiments thereof, it will be understood by those skilled in the art that various other changes in the form and details may be made therein without departing from the scope of the invention.

## Claims

1. A method of coating a pipe joint comprising:
movably mounting a protective material applicator (100, 300) over the pipe joint;
heating a protective material (312) in a housing to soften the protective material, wherein the protective material (312) comprises a polymeric interpenetrating network coating, and wherein the protective material (312) is heated on both sides at a position adjacent to the material's exit from the housing (302).
heating the pipe (101) to a temperature above the melting temperature of the protective material; and
moving the applicator (100, 300) circumferentially around the pipe joint while pressing the protective material against the pipe joint.

2. The method of claim 1, wherein the step of pressing the protective material against the pipe joint includes positioning a first surface of the protective material against an application roller and positioning a second surface of the protective material against the pipe joint, wherein the first surface is heated to a first temperature and the second surface is heated to a second temperature, wherein the first temperature is less than the second temperature, and wherein the step of heating the protective material includes moving the protective material through a channel inside the applicator, wherein heating elements are positioned on either side of the channel.

3. The method of claim 1, wherein the step of mounting a protective material applicator over a pipe joint includes the step of mounting the protective material applicator to a frame and clamping the frame over the pipe joint.

4. The method of claim 3, wherein the step of clamping the frame to the pipe joint includes the step of engaging rollers on the frame with the pipe.

5. The method according to claim 1, simultaneously moving a plurality of applicators circumferentially around the pipe joint to apply multiple layers of protective material to the pipe joint.

6. The method of any of claims 1 to 5, further comprising:
exposing a raw steel strip on a pipe adjacent the pipe joint;
wherein the heating of the protective material comprises the step of preheating a protective strip of material in the housing, wherein the protective strip of material comprises a polymeric interpenetrating network coating, and wherein the protective material is heated on both sides at a position adjacent to the material's exit from the enclosed space, wherein a width of the protective strip is greater than a width of the raw steel strip on the pipe; and
wherein the moving step comprises moving the protective material applicator circumferentially around the raw steel strip while pressing the protective material against the pipe surface.

7. The method according to claim 6, wherein the strip of material is preheated to a temperature that is less than the temperature of the pipe.

8. The method of claim 6, wherein the strip of material comprises a top coat material disposed directly over the polymeric interpenetrating network.

9. The method of claim 6, wherein the step of pressing the protective material against the pipe joint includes positioning a first surface of the protective material against an application roller and positioning a second surface of the protective material against the pipe joint.

10. The method of claim 6, wherein the step of movably mounting a protective material applicator over the weld includes connecting the protective material applicator to a frame that clamps around a pipe and includes a powered roller configured to move the frame circumferentially around the pipe.

11. The method of claim 6, wherein the step of exposing a raw steel strip on the pipe includes connecting a surface preparation device to a frame that clamps around said pipe and includes a powered roller configured to move the frame circumferentially around the pipe.

## Patentansprüche

1. Verfahren zum Beschichten einer Rohrverbindung, welches Folgendes aufweist:
bewegliches Anbringen einer Schutzmaterial-Aufbringvorrichtung (100, 300) über der Rohrverbindung;
Erwärmen eines Schutzmaterials (312) in einem Gehäuse, um das Schutzmaterial zu erweichen, wobei das Schutzmaterial (312) eine Beschichtung aus einem interpenetrierenden Polymemetzwerk aufweist und wobei das Schutzmaterial (312) an einer Position, die dem Austritt des Materials aus dem Gehäuse (302) benachbart ist, auf beiden Seiten erwärmt wird;
Erwärmen des Rohres (101) auf eine Temperatur über der Schmelztemperatur des Schutzmaterials; und
Bewegen der Aufbringvorrichtung (100, 300) in Umfangsrichtung um die Rohrverbindung herum, bei gleichzeitigem Anpressen des Schutzmaterials an die Rohrverbindung.

2. Verfahren nach Anspruch 1, wobei der Schritt des Anpressens des Schutzmaterials an die Rohrverbindung das Anlegen einer ersten Fläche des Schutzmaterials an eine Auftragswalze und das Anlegen einer zweiten Fläche des Schutzmaterials an die Rohrverbindung beinhaltet, wobei die erste Fläche auf eine erste Temperatur erwärmt wird und die zweite Fläche auf eine zweite Temperatur erwärmt wird, wobei die erste Temperatur kleiner als die zweite Temperatur ist, und wobei der Schritt des Erwärmens des Schutzmaterials das Bewegen des Schutzmaterials durch einen Kanal innerhalb der Aufbringvorrichtung beinhaltet, wobei Heizelemente beiderseits des Kanals positioniert sind.

3. Verfahren nach Anspruch 1, wobei der Schritt des Anbringens einer Schutzmaterial-Aufbringvorrichtung über einer Rohrverbindung den Schritt des Anbringens der Schutzmaterial-Aufbringvorrichtung an einem Rahmen und des Festklemmens des Rahmens über der Rohrverbindung beinhaltet.

4. Verfahren nach Anspruch 3, wobei der Schritt des Festklemmens des Rahmens an der Rohrverbindung den Schritt des Ineingriffbringens von Rollen an dem Ralunen mit dem Rohr beinhaltet.

5. Verfahren nach Anspruch 1, wobei gleichzeitig mehrere Aufbringvorrichtungen in Umfangsrichtung um die Rohrverbindung herum bewegt werden, um mehrere Schichten Schutzmaterial auf die Rohrverbindung aufzubringen.

6. Verfahren nach einem der Ansprüche 1 bis 5, welches ferner Folgendes aufweist:
Freilegen eines Rohstahlstreifens auf einem Rohr, das der Rohrverbindung benachbart ist;
wobei das Erwärmen des Schutzmaterials den Schritt des Vorwärmens eines Schutzstreifens von Material in dem Gehäuse beinhaltet, wobei der Schutzstreifen von Material eine Beschichtung aus einem interpenetrierenden Polymernetzwerk aufweist und wobei das Schutzmaterial an einer Position, die dem Austritt des Materials aus dem umschlossenen Raum benachbart ist, auf beiden Seiten erwärmt wird, wobei eine Breite des Schutzstreifens größer als eine Breite des Rohstahlstreifens auf dem Rohr ist, und
wobei der Schritt des Bewegens das Bewegen der Schutzmaterial-Aufbringvorrichtung in Umfangsrichtung um den Rohstahlstreifen herum beinhaltet, bei gleichzeitigem Anpressen des Schutzmaterials an die Rohroberfläche.

7. Verfahren nach Anspruch 6, wobei der Streifen von Material auf eine Temperatur vorgewärmt wird, welche niedriger als die Temperatur des Rohres ist.

8. Verfahren nach Anspruch 6, wobei der Streifen von Material ein Deckschichtmaterial aufweist, das unmittelbar über dem interpenetrierenden Polymemetzwerk angeordnet ist.

9. Verfahren nach Anspruch 6, wobei der Schritt des Anpressens des Schutzmaterials an die Rohrverbindung das Anlegen einer ersten Fläche des Schutzmaterials an eine Auftragswalze und das Anlegen einer zweiten Fläche des Schutzmaterials an die Rohrverbindung beinhaltet.

10. Verfahren nach Anspruch 6, wobei der Schritt des beweglichen Anbringens einer Schutzmaterial-Aufbringvorrichtung über der Schweißnaht das Verbinden der Schutzmaterial-Aufbringvorrichtung mit einem Rahmen beinhaltet, welcher um ein Rohr herum festgeklemmt ist und eine angetriebene Rolle aufweist, die dafür ausgebildet ist, den Rahmen in Umfangsrichtung um das Rohr herum zu bewegen.

11. Verfahren nach Anspruch 6, wobei der Schritt des Freilegens eines Rohstahlstreifens auf dem Rohr das Verbinden einer Vorrichtung zur Oberflächenvorbehandlung mit einem Rahmen beinhaltet, welcher um das Rohr herum festgeklemmt ist und eine angetriebene Rolle aufweist, die dafür ausgebildet ist, den Rahmen in Umfangsrichtung um das Rohr herum zu bewegen.

## Revendications

1. Procédé de recouvrement d'un raccord de tube, le procédé comportant les étapes qui consistent à :
monter de manière mobile un applicateur (100, 300) de matériau de protection au-dessus du raccord de tube,
chauffer un matériau de protection (312) dans un logement de manière à amollir le matériau de protection, le matériau de protection (312) comprenant un revêtement polymère en réseau interpénétré et le matériau de protection (312) étant chauffé sur ses deux faces en un emplacement adjacent à la sortie du matériau du logement (302),
chauffer le tube (101) à une température supérieure à la température de fusion du matériau de protection et
déplacer l'applicateur (100, 300) périphériquement autour du raccord de tube tout en repoussant le matériau de protection contre le raccord de tube.

2. Procédé selon la revendication 1, dans lequel l'étape qui consiste à repousser le matériau de protection contre le raccord de tube comprend l'étape qui consiste à placer une première surface du matériau de protection contre un rouleau d'application et à placer une deuxième surface du matériau de protection contre le raccord de tube, la première surface étant chauffée à une première température et le deuxième surface étant chauffée à une deuxième température, la première température étant inférieure à la deuxième température, l'étape de chauffage du matériau de protection comprenant le déplacement du matériau de protection dans un canal prévu à l'intérieur de l'applicateur, des éléments chauffants étant disposés sur chaque côté du canal.

3. Procédé selon la revendication 1, dans lequel l'étape qui consiste à monter un applicateur de matériau de protection au-dessus d'un raccord de tube comprend l'étape qui consiste à monter l'applicateur de matériau de protection sur un bâti et à serrer le bâti au-dessus du raccord de tube.

4. Procédé selon la revendication 3, dans lequel l'étape qui consiste à serrer le bâti sur le raccord de tube comprend l'étape qui consiste à engager des rouleaux sur le bâti doté du tube.

5. Procédé selon la revendication 1, dans lequel plusieurs applicateurs sont déplacés simultanément à la périphérie du raccord de tube de manière à appliquer plusieurs couches de matériau de protection sur le raccord de tube.

6. Procédé selon l'une quelconque des revendications 1 à 5, comportant en outre l'étape qui consiste à :
exposer un ruban d'acier brut sur un tube en position adjacente au raccord de tube,
le chauffage du matériau de protection comprenant l'étape qui consiste à préchauffer un ruban protecteur de matériau dans le logement, le ruban protecteur de matériau comprenant un revêtement polymère en réseau interpénétré, le matériau de protection étant chauffé sur ses deux faces en une position adjacente à la sortie du matériau de l'espace fermé, la largeur du ruban de protection étant supérieure à la largeur du ruban d'acier brut prévu sur le tube et
l'étape de déplacement comprenant l'étape qui consiste à déplacer l'applicateur de matériau de protection à la périphérie autour du ruban d'acier brut tout en repoussant le matériau de protection contre la surface du tube.

7. Procédé selon la revendication 6, dans lequel le ruban de matériau est préchauffé à une température inférieure à la température du tube.

8. Procédé selon la revendication 6, dans lequel le ruban de matériau comprend un matériau de revêtement supérieur disposé directement au-dessus du réseau polymère interpénétré.

9. Procédé selon la revendication 6, dans lequel l'étape qui consiste à repousser le matériau de protection contre le raccord de tube comprend le placement d'une première surface du matériau de protection contre un rouleau d'application et à placer une deuxième surface du matériau de protection contre le raccord de tube.

10. Procédé selon la revendication 6, dans lequel l'étape qui consiste à monter de manière déplaçable un applicateur de matériau de protection au-dessus de la soudure comprend la liaison de l'applicateur de matériau de protection à un bâti qui pince le tube et qui comprend un galet motorisé configuré pour déplacer le bâti périphériquement autour du tube.

11. Procédé selon la revendication 6, dans lequel l'étape qui consiste à exposer un ruban d'acier brut prévu sur le tube comprend la liaison d'un dispositif de préparation de surface à un bâti qui serre la périphérie dudit tube et qui contient un galet motorisé configuré pour déplacer le bâti périphériquement autour du tube.
